# EUROPEAN PATENT SPECIFICATION

(11) **EP 2 515 453 B1**
(45) Date of publication and mention of the grant of the patent: **05.08.2015**
(21) Application number: 11163066.1
(22) Date of filing: 19.04.2011
(51) Int. Cl.: H04B 10/11, H02M 7/00, H02M 1/00

(54) **Communication system for power electronic converters**
Kommunikationssystem für elektronische Stromwandler
Système de communication pour convertisseurs de puissance électroniques

(43) Date of publication of application: 24.10.2012
(73) Proprietor: ABB Research Ltd., 8050 Zürich (CH)
(72) Inventor: Dzung, Dacfey, 5430 Wettingen (CH); Cottet, Didier, 8050 Zürich (CH); Vallestad, Anne, 1338 Sandvika (NO); Kalland, Lars, 1344 Haslum (NO)
(74) Representative: ABB Patent Attorneys

(56) References cited:
- WO-A1-2004/001967
- DE-A1-102004 004 621
- JP-A- 8 321 809
- US-A1- 2004 024 937
- US-A1- 2010 086 312
- US-B1- 6 262 906

## Description

### FIELD OF THE INVENTION

The invention relates to the field of power electronic converters, and in particular to a communication system for controlling or supervising at least one power semiconductor switch of the converter.

### BACKGROUND OF THE INVENTION

Power electronic converters are widely used for converting electric power from AC to DC, from DC to AC, from a first DC voltage to a second DC voltage, or from a first AC frequency to a second AC frequency. The converters are made of a plurality of possibly identical converter modules arranged in a converter cabinet or housing and in turn comprising power semiconductor switches or valves such as IGCTs (integrated gate-commutated thyristors) or IGBTs (insulated gate bipolar transistors) and their corresponding control units or drivers. Depending on the intended field of application, the modules may be on medium to high electric potential in excess of 1 kV, and ranging up to 30 kV, with respect to ground potential. Communication lines for communicating switching commands from a higher level converter control unit on ground potential therefore need to electrically isolate or bridge this potential difference.

Conventionally, communication signals in this context are carried by optical fibers which can support high-data rates and are capable of withstanding large voltages, albeit at the expense of a critical ageing behavior. This solution however requires mechanical connectors at both ends of the optical fiber, which renders the mounting and replacement of the converter modules cumbersome, and which adds the costs of the mechanical connectors to the costs of the fiber. Therefore, DE-102004004621-A1 proposes to rigidly mount a piece of optical fibre on an electro-optical circuit board, and to couple the optical signal via lenses and mirrors. The intra-board isolation achieved this way appears to work fine for voltages of up to 500 V.

### DESCRIPTION OF THE INVENTION

It is an objective of the invention to enable a flexible and cost-effective electrical isolation between communicating converter parts on different electrical potential. This objective is achieved by a communication system, as well as by a converter module, for a power electronic converter according to the independent claims. Further preferred embodiments are evident from the dependent patent claims.

According to the invention, a power electronic converter with a plurality of converter modules comprising controllable power semiconductor switches and individually mountable onto a converter cabinet or frame has a communication system that involves unguided transmission of optical signals between optical elements arranged on a converter module and on the converter cabinet, respectively. The proposed free-space optical signal transmission between two distinct parts of the converter combines advantages in terms of flexibility offered by radio transmission and advantages of optical communication in terms of data rate, reliability and electromagnetic immunity, while at the same time avoiding the complex and expensive cabling of optical fiber solutions.

A first optical element such as a transceiver cover of a photoelectric transceiver, a mirror, or a lens is arranged on a suitable support such as a Printed Circuit Board mounted onto the converter cabinet. A second optical element is arranged on a different support that is part of the converter module. The first and second optical elements are adapted to propagate an optical, i.e. a visible, Infrared IR, or Ultraviolet UV signal from or to a respective transceiver. Between the first and second optical element, a straight optical path along a line-of-sight is defined and traversing an optically transparent medium comprising e.g. air or glass. The straight optical path does not involve any reflection or other guidance of the optical signal at lateral boundaries of the optically transparent medium.

In an advantageous embodiment of the invention, the straight optical path is adapted or designed to isolate or withstand a potential or voltage difference between the converter cabinet on ground potential and the converter module at a potential in excess of 1 kV, or even in excess of 3 kV.

In a further advantageous embodiment, the optical transmission path is shielded against non-transparent particles or other obscurities. Compared to radio transmission, the possibility to selectively guide and shield the optical transmission paths allows to further increase data rate and transmission reliability.

### BRIEF DESCRIPTION OF THE DRAWINGS

The subject matter of the invention will be explained in more detail in the following text with reference to preferred exemplary embodiments which are illustrated in the attached drawings, in which:
Fig.1 schematically shows a power electronic converter with two cabinets;
Fig.2 depicts an enlarged view of a module-transceiver pair; and
Fig.3 depicts an optical path with mechanical protection.

In principle, identical parts are provided with the same reference symbols in the figures.

### DETAILED DESCRIPTION OF PREFERRED EMBODIMENTS

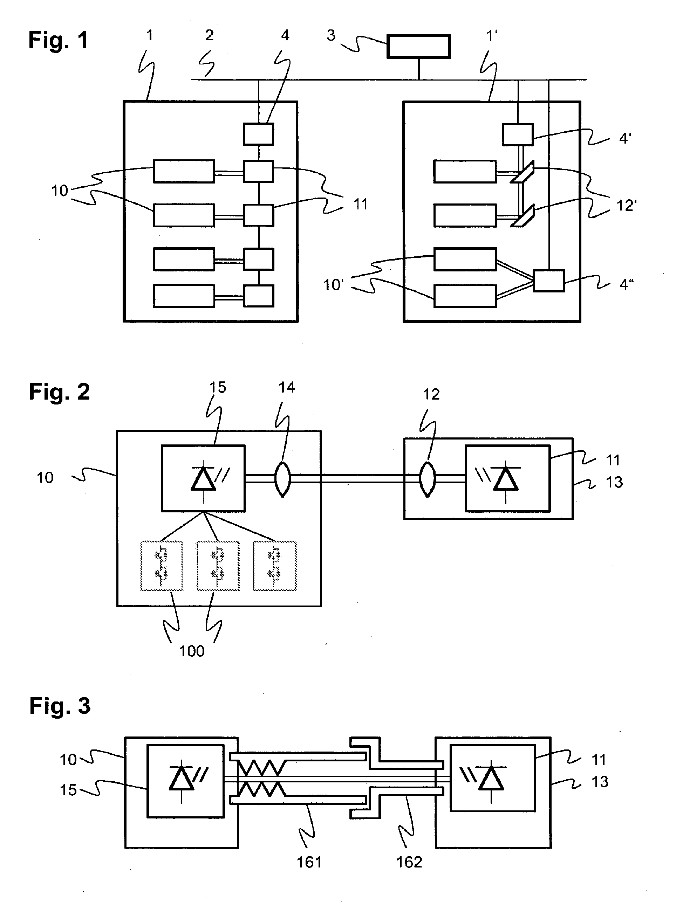

Fig.1 schematically shows a power electronic converter with two cabinets 1, 1', in each of which a plurality of converter modules 10 are mounted. The converter modules 10 comprise power electronic semiconductor switches or valves that are adapted to switch large currents flowing in power conductors (not shown) from or to the converter. In the context of the present specification, the term cabinet designates a separable part of the converter with a supporting frame and a dedicated cabinet housing and power supply. A wired backbone network 2 carries communication signals between a higher level converter controller 3 and cabinet controllers 4, 4', 4". In the left-hand cabinet 1, the cabinet controller 4 is connected to a number of electro-optical transceivers 11 that are in turn mounted on or attached to the cabinet housing. Based on the communication signals from the converter controller 3 or cabinet controller 4, each of the transceivers 11 generates optical signals that are transmitted to an associated one of the plurality of power electronic modules 10. In the right-hand cabinet 1', the two cabinet controllers 4', 4" incorporate electro-optical transceivers that generate and address optical signals at the attention of the modules 10' in the cabinet 1'. These signals are propagated in a point-to-multipoint manner to a plurality of modules in parallel. This occurs either by means of appropriate passive first optical elements 12' such as beam splitters or mirrors redirecting the optical signals as required, or by reverting to diffuse propagation in case of an electro-optical transceiver devoid of any focusing or other beam-generating element.
Fig.2 depicts an enlarged view of a module-transceiver pair of cabinet 1 of Fig.1. The electro-optical transceiver 11 generates the optical data signals by modulating the output of lasers or light emitting diodes. A first optical element 12 such as a transparent enclosure or cover of the photoelectric transceiver, a standalone mirror, or a standalone lens is arranged on a suitable support 13 such as a Printed Circuit Board mounted onto the converter cabinet. The optical signal is collected by a second optical element 14 and detected by a photodiode as part of a communication unit 15 of the module. Again, the second optical element 14 may be a transparent enclosure or cover of the photodiode or of the communication unit 15, or a standalone mirror or lens suitably arranged on the module 10. Hence, the optical elements 12 and 14 may, but need not form an integral part of the electro-optical transceiver 11 and the communicating unit 15, respectively. The photodiode converts the received optical signal into an electrical signal, based on which a module controller issues control commands to the individual power semiconductor switches 100 of the module 10. The distance between the first 12 and second 14 optical element, i.e. the length of the optical path is typically between 5 cm and 2 m. It is to be noted that in the arrangement of cabinet 2 of Fig.1, the support by means of which a first optical element, i.e. a mirror 12', is attached to the cabinet 1' is different from a support of the unique electro-optical transceiver.

In Figs. 1 and 2, the point-to-point and point-to-multipoint optical paths are represented by double lines, wherein a voltage difference between the converter cabinet and the converter module is entirely absorbed between the two optical elements 12, 14. The first optical elements 12, 12' are mechanically fixed to the cabinet 1, 1' in a manner independent of the mounting of the modules 10, 10' (carrying the second optical element 14) in the same cabinet. Hence, and provided that the two optical elements are properly aligned, there is no separate manual step such as (dis-)connecting a mechanical connector that would have to be observed specifically for communication purposes when mounting and dismounting the modules. Proper alignment of the optical elements may preferably be arranged for by means of a slide-in mounting mechanism for fast assembly and servicing of the converter modules.

The optical signal propagates between the two optical elements in a straight line, i.e. the optical signal is not reflected or redirected by a further mirror or at the transition between two distinct media such as the surface of an optical fiber. Hence, optical signal propagation preferably occurs in a directed light beam, although diffuse optical signal propagation is also possible as long as a sufficient share of the emitted light is collected by the second optical element. Optical mirrors may be used to guide the optical signals around corners within the converter module 10 or on the support 13, if required by the mechanical design of the converter cabinet and modules.

The proposed optical communication may take place bi-directionally, i.e. in addition to the top-down communication of control commands to the power semiconductor switches, sensing, supervisory or other diagnostic signals may be communicated from the modules to the higher level converter controller. To this purpose, electro-optical transceivers are likewise provided on the module, while the counterpart support mounted on the cabinet likewise includes an opto-electronic detector or photodiode. For added reliability, redundant bi-directional links can be implemented.

The wired backbone network carrying the communication signals to the physical locations of the electro-optical transceivers inside converter cabinets may be modular and thus allows adding or removing an optical link in a modular way such as to accommodate a definable number of links in each cabinet.

Optical communication in free space may be impaired by solid particles such as dust from the environment or other optically non-transparent media, and by particles emanating from the equipment such a smoke, as well as by external light sources, e.g. arcs. Therefore, the optical propagation paths are preferably protected by a shield or tube.

Fig.3 depicts an electro-optical transceiver 11 and a communicating unit 15 arranged respectively on a converter module 10 and a support 13, as well as a shield 16 for mechanical protection of the optical path. The shield has the form of a thin-walled tube arranged in between the module and support. In particular, the shield comprises two parts, a first part 161 attached to the module 10, and a second part 162 attached to the support 13, which engage in a suitable fitting. The first part 161 has a surface shape in the form of ripples that provide for a definable creepage distance for high voltage insulation.

Alternatively, any solid material, e.g. a volume of epoxy, providing electrical insulation between the converter cabinet and the converter modules and therefore extending substantially in a direction perpendicular to the optical path, may contain openings or holes through which the optical beams do propagate. In any case, optimal protection of the optical link is realized if only a small air gap remains between transceiver and communicating unit and a respective end of the shield or of the opening. Bi-directional transmission and redundant paths may occur either through separate shields or openings, or in a common shield or opening.

The proposed free-space optical signal transmission is also possible as direct inter module communication between two neighbouring converter modules.

In summary, in the proposed free-space signal transmission the optical signal, when coding control information directed to a power semiconductor switch of the converter module, is generated by an emitter connected to a central converter control unit of the power electronic converter and detected by a detector connected to a controller of the power semiconductor switch. Alternatively, the optical signal, when coding diagnostic information from the power semiconductor switch, is generated by an emitter connected to a controller of the power semiconductor switch, and detected by a detector connected to the converter control unit.

### LIST OF REFERENCE SYMBOLS

- 1: converter cabinet
- 2: backbone network
- 3: converter controller
- 4: cabinet controller
- 10: converter module
- 11: electro-optical transceiver
- 12: first optical element
- 13: support
- 14: second optical element
- 15: communication unit
- 100: power semiconductor
- 161, 162: shield

## Claims

1. A communication system for a power electronic converter with a plurality of converter modules (10, 10') individually mountable in a converter cabinet (1, 1'), **characterized in that** the communication system comprises:
- a first optical element (12, 12') and a second optical element (14) adapted to propagate an optical signal to or from the respective other optical element, the first and second optical element being arranged respectively on the converter cabinet and on a converter module,
- an optically transparent medium comprising a straight optical path for unguided transmission of optical signals between the first optical element and the second optical element, and
- a shield (161, 162) which protects the straight optical path against non-transparent obstacles.

2. The communication system according to claim 1, **characterized in that** the straight optical path is adapted to isolate a potential difference in excess of 1 kV, and preferably in excess of 3 kV, between the converter cabinet and the converter module.

3. The communication system according to claim 1, **characterized in that** the transparent optical medium is air.

4. The communication system according to claim 2, **characterized in that** the optically transparent medium is air, and **in that** the straight optical path passes through openings in a solid electrical isolator arranged in-between the first and second optical element.

5. The communication system according to claim 1, **characterized in that** it comprises an electro-optical transceiver generating a plurality of optical signals to be propagated in point-to-multipoint transmission to two converter modules (10').

6. A converter module for a power electronic converter with a plurality of converter modules (10, 10') individually mountable in a converter cabinet (1, 1'), the converter module comprising a power semiconductor switch (100), **characterized in that** the converter module further comprises a communication unit (15), a second optical element (14) adapted to propagate, to the communication unit, an optical signal received, from a first optical element (12) arranged on a converter cabinet, across an optically transparent medium comprising a straight optical path for unguided transmission of optical signals between the first optical element and the second optical element, wherein a shield (161, 162) protects the straight optical path against non-transparent obstacles.

7. The converter module according to claim 6, **characterized in that** the communication unit (15) is adapted to identify among a plurality of optical signals propagated in point-to-multipoint transmission an optical signal directed to the semiconductor switch (100).

## Patentansprüche

1. Kommunikationssystem für einen elektronischen Leistungsumsetzer mit mehreren Umsetzermodulen (10, 10'), die einzeln in einem Umsetzergehäuse (1, 1') montierbar sind, **dadurch gekennzeichnet, dass** das Kommunikationssystem Folgendes umfasst:
- ein erstes optisches Element (12, 12') und ein zweites optisches Element (14), die dazu ausgelegt sind, ein optisches Signal zu dem oder von dem jeweiligen anderen optischen Element zu übermitteln, wobei das erste und das zweite optische Element jeweils an dem Umsetzergehäuse und an einem Umsetzermodul angeordnet sind, und
- ein optisch transparentes Medium, das einen geraden optischen Weg für eine ungelenkte Übertragung von optischen Signalen zwischen dem ersten optischen Element und dem zweiten optischen Element umfasst, und
- eine Abschirmung (161, 162), die den geraden optischen Weg gegen intransparente Hindernisse schützt.

2. Kommunikationssystem nach Anspruch 1, **dadurch gekennzeichnet, dass** der gerade optische Weg dazu ausgelegt ist, eine Potentialdifferenz von mehr als 1 kV und vorzugsweise von mehr als 3 kV zwischen dem Umsetzergehäuse und dem Umsetzermodul zu isolieren.

3. Kommunikationssystem nach Anspruch 1, **dadurch gekennzeichnet, dass** das transparente optische Medium Luft ist.

4. Kommunikationssystem nach Anspruch 2, **dadurch gekennzeichnet, dass** das optisch transparente Medium Luft ist und dass der gerade optische Weg durch Öffnungen in einem festen elektrischen Isolator, der zwischen dem ersten und dem zweiten optischen Element angeordnet ist, verläuft.

5. Kommunikationssystem nach Anspruch 1, **dadurch gekennzeichnet, dass** es einen elektrooptischen Sendeempfänger umfasst, der mehrere optische Signale erzeugt, die in einer Punkt-zu-Mehrpunkt-Übertragung an zwei Umsetzermodule (10') übermittelt werden sollen.

6. Umsetzermodul für einen elektronischen Leistungsumsetzer mit mehreren Umsetzermodulen (10, 10'), die einzeln in einem Umsetzergehäuse (1, 1') montierbar sind, wobei das Umsetzermodul einen Leistungshalbleiterschalter (100) umfasst, **dadurch gekennzeichnet, dass** das Umsetzermodul ferner umfasst: eine Kommunikationseinheit (15) und ein zweites optisches Element (14), das dazu ausgelegt ist, ein optisches Signal, das aus einem ersten optischen Element (12), das an einem Umsetzergehäuse angeordnet ist, empfangen wird, über ein optisch transparentes Medium, das einen geraden optischen Weg für eine ungelenkte Übertragung von optischen Signalen zwischen dem ersten optischen Element und dem zweiten optischen Element umfasst, an die Kommunikationseinheit zu übermitteln, wobei eine Abschirmung (161, 162) den geraden optischen Weg gegen intransparente Hindernisse schützt.

7. Umsetzermodul nach Anspruch 6, **dadurch gekennzeichnet, dass** die Kommunikationseinheit (15) dazu ausgelegt ist, ein an den Halbleiterschalter (100) gerichtetes optisches Signal unter mehreren optischen Signalen, die in einer Punkt-zu-Mehrpunkt-Übertragung übermittelt werden, zu identifizieren.

## Revendications

1. Système de communication pour un convertisseur électronique de puissance comprenant une pluralité de modules convertisseurs (10, 10') pouvant être montés individuellement dans une armoire de convertisseur (1, 1'), **caractérisé en ce que** le système de communication comprend :
- un premier élément optique (12, 12') et un deuxième élément optique (14) adaptés pour la propagation d'un signal optique vers ou depuis l'autre élément optique respectif, les premier et deuxième éléments optiques étant respectivement disposés sur l'armoire de convertisseur et sur un module convertisseur,
- un milieu optiquement transparent comprenant un trajet optique rectiligne destiné à la transmission non guidée de signaux optiques entre le premier élément optique et le deuxième élément optique, et
- un écran (161, 162) qui protège le trajet optique rectiligne contre des obstacles non transparents.

2. Système de communication selon la revendication 1, **caractérisé en ce que** le trajet optique rectiligne est adapté pour isoler une différence de potentiel supérieure à 1 kV, et de préférence supérieure à 3 kV, entre l'armoire de convertisseur et le module convertisseur.

3. Système de communication selon la revendication 1, **caractérisé en ce que** le milieu optiquement transparent est de l'air.

4. Système de communication selon la revendication 2, **caractérisé en ce que** le milieu optiquement transparent est de l'air et **en ce que** le trajet optique rectiligne passe à travers des ouvertures dans un isolateur électrique monolithique interposé entre le premier et le deuxième élément optique.

5. Système de communication selon la revendication 1, **caractérisé en ce qu'**il comprend un émetteur/récepteur électro-optique qui génère une pluralité de signaux optiques destinés à se propager dans une transmission point à multipoint vers deux modules convertisseurs (10').

6. Module convertisseur pour un convertisseur électronique de puissance comprenant une pluralité de modules convertisseurs (10, 10') pouvant être montés individuellement dans une armoire de convertisseur (1, 1'), le module convertisseur comprenant un commutateur semiconducteur de puissance (100), **caractérisé en ce que** le module convertisseur comprend en outre une unité de communication (15), un deuxième élément optique (14) adapté pour la propagation, vers l'unité de communication, d'un signal optique reçu, de la part d'un premier élément optique (12) disposé sur une armoire de convertisseur, à travers un milieu optiquement transparent comprenant un trajet optique rectiligne destiné à la transmission non guidée de signaux optiques entre le premier élément optique et le deuxième élément optique, un écran (161, 162) protégeant le trajet optique rectiligne contre des obstacles non transparents.

7. Module convertisseur selon la revendication 6, **caractérisé en ce que** l'unité de communication (15) est adaptée pour identifier, parmi une pluralité de signaux optiques qui se propagent dans une transmission point à multipoint, un signal optique destiné au commutateur semiconducteur (100).
